# EUROPEAN PATENT SPECIFICATION

(11) **EP 2 977 893 B1**
(45) Date of publication and mention of the grant of the patent: **22.01.2020**
(21) Application number: 15177077.3
(22) Date of filing: 16.07.2015
(51) Int. Cl.: G06F 8/65, G06F 8/656, G06F 8/658

(54) **LIGHTWEIGHT APP OFFLINE UPDATING METHOD, DEVICE AND TERMINAL**
OFFLINE-AKTUALISIERUNGSVERFAHREN FÜR LEICHTGEWICHTIGE ANWENDUNG, VORRICHTUNG UND ENDGERÄT
PROCÉDÉ DE MISE À JOUR HORS LIGNE D'UNE APPLICATION LÉGÈRE, DISPOSITIF ET TERMINAL

(30) Priority: 21.07.2014 CN 201410346050
(43) Date of publication of application: 27.01.2016
(73) Proprietor: Xiaomi Inc., Beijing 100085 (CN)
(72) Inventor: CHEN, Dingwei, 100085 BEIJING (CN); XU, Guoshi, 100085 BEIJING (CN); ZUO, Jinglong, 100085 BEIJING (CN)
(74) Representative: Cabinet Beau de Loménie

(56) References cited:
- US-A1- 2009 320 014
- US-A1- 2014 122 638

## Description

### TECHNICAL FIELD

The present disclosure generally relates to the field of Internet technology, and more particularly, to a light app offline updating method, device and terminal.

### BACKGROUND

As a search-and-play browser application dispensed with downloading, light application (or Light APP, light app) attracts extensive attention due to its advantages of small RAM usage, less traffic consumption and simple and convenient application switching, etc. Based on a browser platform, light app is able to run normally on multiple platforms and multiple terminals. Therefore, more and more users choose light app for web browsing or web access operation. However, users with web browsing or web access operation through light app under weak network signal or even no network signal cannot update their light app.
Document US 2014/122638 discloses a webpage browsing method and device, and document US 2009/320014 discloses a system and method for offline updation of software in virtual machine images.

### SUMMARY

In order to overcome problems in related technologies, the present disclosure provides a light app offline updating method, device and terminal.

The invention is defined by the independent claims. Advantageous embodiments are disclosed by the dependent claims.

According to the first aspect, the invention relates to a light app offline updating method, comprising:
respectively setting an offline partition for each light app;
acquiring, for each light app, key elements of a page corresponding to the light app when network download speed is greater than a preset threshold value;
storing key elements (as offline data) of the page in the corresponding offline partition;
acquiring from a server, if a start-up operation of the light app is detected, an offline configuration item corresponding to the light app, the offline configuration item being configured by the server; and
processing, according to the offline configuration item, offline data in the offline partition of the light app.

Optionally, the offline configuration item comprises offline data elimination time information; and the step of processing, according to the offline configuration item, offline data in the offline partition of the light app comprises:
deleting offline data in the offline partition of the light app every time interval corresponding to offline data elimination time information.

Optionally, the offline configuration item comprises offline data elimination space information; and the step of processing, according to the offline configuration item, offline data in the offline partition of the light app comprises:
deleting offline data in the offline partition of the light app when offline data in the offline partition of the light app is beyond a data storage capacity corresponding to the offline data elimination space information.

Optionally, the step of processing, according to the offline configuration item, offline data in the offline partition of the light app comprises:
encapsulating the offline configuration item and acquiring an encapsulating object;
sending the encapsulating object to a custom elimination thread; and
processing, according to the encapsulating object, offline data in the offline partition of the light app by means of the elimination thread.

Optionally, the step of acquiring key elements of the page corresponding to the light app comprises:
acquiring key elements of the page corresponding to the light app by monitoring data packets flowing through the network.

Optionally, the step of respectively setting an offline partition for each light app comprises:
setting a first type offline partition for the light app if the light app is an image type light app; and
setting a second type offline partition for the light app if the light app is a text type light app;
wherein storage space of the first type offline partition is greater than that of the second type offline partition.

Optionally, offline data elimination time of the image type light app is greater than that of the text type light app.

According to a second aspect, the invention relates to a light app offline updating device, comprising:
a partition setup module, configured to respectively set an offline partition for each light app;
a page element acquisition module, configured to acquire, for each light app, key elements of a page corresponding to the light app when network download speed is greater than a preset threshold value;
a data storage module, configured to store key elements (as offline data) of the page in the corresponding offline partition;
a configuration item acquisition module, configured to acquire from a server, if a start-up operation of the light app is detected, an offline configuration item corresponding to the light app, the offline configuration item being configured by the server; and
a data processing module, configured to process, according to the offline configuration item, offline data in the offline partition of the light app.

Optionally, the offline configuration item comprises offline data elimination time information; and the data processing module is configured to delete offline data in the offline partition of the light app every time interval corresponding to offline data elimination time information.

Optionally, the offline configuration item comprises offline data elimination space information, and the data processing module is configured to delete offline data in the offline partition of the light app when offline data in the offline partition of the light app is beyond a data storage capacity corresponding to the offline data elimination space information.

Optionally, the data processing module is configured to encapsulate the offline configuration item and acquire an encapsulating object; send the encapsulating object to a custom elimination thread; and process, according to the encapsulating object, offline data in the offline partition of the light app by means of the elimination thread.

Optionally, the page element acquisition module is configured to acquire key elements of the page corresponding to the light app by monitoring data packets flowing through the network.

Optionally, the partition setup module is configured to set a first type offline partition for the light app if the light app is an image type light app; and to set a second type offline partition for the light app if the light app is a text type light app;
wherein storage space of the first type offline partition is greater than that of the second type offline partition.

Optionally, offline data elimination time of the image type light app is greater than that of the text type light app.

According to a third aspect, the invention relates to a terminal, comprising:
a processor; and
a memory configured to store instructions executable by the processor;
wherein, the processor is configured to: respectively set an offline partition for each light app; acquire, for each light app, key elements of a page corresponding to the light app when network download speed is greater than a preset threshold value; store key elements (as offline data) of the page in the corresponding offline partition; acquire from a server, if a start-up operation of the light app is detected, an offline configuration item corresponding to the light app, the offline configuration item being configured by the server; and process, according to the offline configuration item, offline data in the offline partition of the light app.

In a particular embodiment, the steps of the light app offline updating method are determined by computer program instructions.

Consequently, according to a fourth aspect, the invention is also directed to a computer program for executing the steps of a light app offline updating method as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

The technical solution according to the embodiments of the disclosure may have the following beneficial effects:
By acquiring from a server, in case of detecting start-up operation of the light app by the terminal, an offline configuration item corresponding to the light app, and processing, according to the offline configuration item, offline data in the offline partition of the light app, it may reach the object of controlling elimination of offline data of the light app by a cloud server and providing users with web browsing under weak network signal or even no network signal, thereby improving user experience.

It is to be understood that both the foregoing general description and the following detailed description are exemplary and explanatory only and are not restrictive of the disclosure.

### BRIEF DESCRIPTION OF THE DRAWINGS

The accompanying drawings, which are incorporated in and constitute a part of this specification, illustrate embodiments consistent with the invention and, together with the description, serve to explain the principles of the invention.
Fig. 1 is a flow chart showing a light app offline updating method according to an exemplary embodiment.
Fig. 2 is a flow chart showing a light app offline updating method according to an exemplary embodiment.
Fig. 3 is a block diagram showing a light app offline updating device according to an exemplary embodiment.
Fig. 4 is a block diagram of a terminal according to an exemplary embodiment.

### DESCRIPTION OF THE EMBODIMENTS

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of apparatuses and methods consistent with aspects related to the invention as recited in the appended claims.

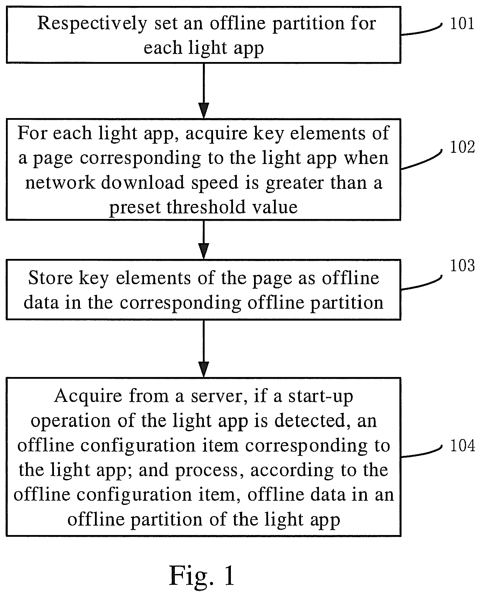

Fig. 1 is a flow chart showing a light app offline updating method according to an exemplary embodiment. As shown in Fig.1, the light app offline updating method is implemented by a terminal, and comprises the following steps.

In Step 101, an offline partition is respectively set for each light app.

In Step 102, for each light app, key elements of a page corresponding to the light app are acquired when network download speed is greater than a preset threshold value.

In Step 103, key elements of the page are stored as offline data in the corresponding offline partition.

In Step 104, if a start-up operation of the light app is detected, an offline configuration item corresponding to a light app is acquired from a server, and offline data in the offline partition of the light app is processed according to the offline configuration item.

The offline configuration item is configured by a server.

With the method according to the embodiments of the present disclosure, if a start-up operation of the light app is detected by the terminal, an offline configuration item corresponding to the light app is acquired from a server, and offline data in the offline partition of the light app is processed, according to the offline configuration item. Controlling elimination of offline data of the light app by a cloud server and providing users with web browsing under weak network signal or even no network signal is thus reached, which improves user experience.

Optionally, the offline configuration item comprises offline data elimination time information; and the step of processing, according to the offline configuration item, offline data in the offline partition of the light app comprises:
deleting offline data in the offline partition of the light app every time interval corresponding to offline data elimination time information.

Optionally, the offline configuration item comprises offline data elimination space information; and the step of processing, according to the offline configuration item, offline data in the offline partition of the light app comprises:
deleting offline data in the offline partition of the light app when offline data in the offline partition of the light app is beyond a data storage capacity corresponding to the offline data elimination space information.

Optionally, the step of processing, according to the offline configuration item, offline data in the offline partition of the light app comprises:
encapsulating the offline configuration item and acquiring an encapsulating object;
sending the encapsulating object to a custom elimination thread; and
processing, according to the encapsulating object, offline data in the offline partition of the light app by means of the elimination thread.

Optionally, the step of acquiring key elements of the page corresponding to the light app comprises:
acquiring key elements of the page corresponding to the light app by monitoring data packets flowing through the network.

Optionally, the step of respectively setting an offline partition for each light app comprises:
setting a first type offline partition for the light app if the light app is an image type light app; and
setting a second type offline partition for the light app if the light app is a text type light app;
the storage space of the first type offline partition being greater than that of the second type offline partition.

Optionally, offline data elimination time of the image type light app is greater than that of the text type light app.

Optional embodiments of the present disclosure may be formed by arbitrary combination of all the foregoing optional technical solutions, not repeated any more herein.

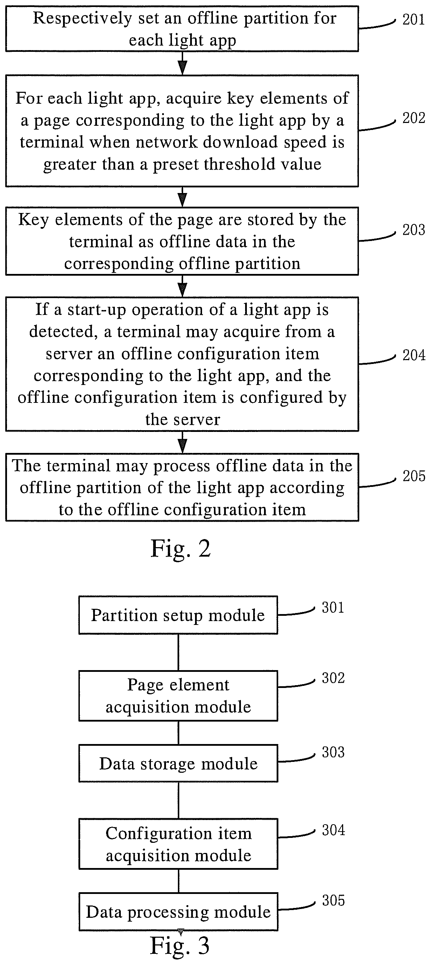

Fig. 2 is a flow chart showing a light app offline updating method according to an exemplary embodiment. As shown in Fig.2, the light app offline updating method is implemented by a terminal, and comprises the following steps.

In Step 201, an offline partition is respectively set for each light app.

A light app is a type of application for presenting page content by means of a browser kernel with a presentation manner similar to client-side application. Taking news application of a client side as an example, a news application server generally captures news content on a self-media (or "we media") platform such as news websites or microblogs and the like, and focuses news content captured on the client side-news application to present these news content. A large installation package (generally a few megabytes or even dozens of megabytes) needs to be installed on news application of a client side. However, a light app does not need to install such a large installation package, and the size of an installation package installed on a light app is only hundreds of kilobytes. Generally speaking, the essence of a light app is to browse web pages, and its presentation manner is just like that of using a client-side application.

In the embodiments of the present disclosure, with respect to different types of light apps, the terminal generally sets offline partitions of different sizes. Taking an image type light app and a text type light app as an example, an image occupies more storage space than a character. Therefore, a first type offline partition is set for an image type light app, and a second type offline partition is set for a text type light app; the storage space of the first type offline partition being greater than that of the second type offline partition.

Optionally, when offline partitions are set by the terminal for image type light apps, offline partitions with consistent storage space size are respectively set for image type light apps. The storage space size of each offline partition is for example 512M. When offline partitions are set by the terminal for text type light apps, offline partitions with consistent storage space size are respectively set for text type light apps. The storage space size of each offline partition is for example 64M. The embodiments of the present disclosure do not make specific limitation to the sizes of offline partitions, as the case may be.

In addition, when light apps added by the terminal comprise video type light apps, offline partitions may be set for the video type light apps in the same way as above. For example, a third type offline partition is set for the light app, and storage space of the third type offline partition is greater than that of the first type offline partition. The embodiments of the present disclosure do not make specific limitation to types of light apps.

In Step 202, for each light app, key elements of the page corresponding to the light app are acquired by the terminal when network download speed is greater than a preset threshold value.

Key elements of a page refer to key items emerging on each page. These key items comprise: trademark or logo, main navigation, category navigation (on the relevant category page), header, main content of a page, a search box, space for self-promotion or space for advertising products or services of other companies.

In the embodiments of the present disclosure, the network speed of the current network where the terminal is located is good if network download speed is greater than a preset threshold value, and is available for acquiring page element of a light app so as to provide users with web browsing according to page elements acquired previously under weak network signal or even no network signal. The size of the preset threshold value may be 256KBs or 512KBs, etc. The embodiments of the present disclosure do not make specific limitation to the size of the preset threshold value, as the case may be. Wherein, the terminal may specifically acquire key elements of a page corresponding to a light app by means of sniffing technology, i.e., monitoring data packets flowing through network by means of sniffer tools, thus acquiring key elements of a page corresponding to the light app according to data packets flowing through network. Of course, in addition to the sniffing technology, other acquisition manners may be employed for acquiring key elements of a page corresponding to a light app, to which the embodiments of the present disclosure make no specific limitation.

In Step 203, key elements of the page are stored by the terminal as offline data in the corresponding offline partition.

In the embodiments of the present disclosure, in Step 201, an offline partition is respectively set for each light app correspondingly. Therefore, after key elements of a page corresponding to a certain light app are acquired according to the foregoing Step 202, the key elements may be stored as offline data in the corresponding offline partition.

It should be explained that as time goes on, offline data of each offline partition will be more and more, occupying plenty of storage space of the terminal. Moreover, some offline data stored in offline partitions may be out of date. For example, with respect to news light app, news websites may update page contents every few minutes; concerning users, they may be more inclined to acquiring the latest news. Therefore, news content acquired previously is useless. Offline data in an offline partition may be eliminated periodically so as to save storage space of the terminal, and specific elimination process is seen in the following Step 204 and Step 205.

In Step 204, if a start-up operation of a light app is detected, the terminal may acquire from a server an offline configuration item corresponding to the light app, the offline configuration item being configured by the server.

The offline configuration item may be in an XML (Extensible Markup Language) data format or a json (JavaScript Object Notation) data format, to which the embodiments of the present disclosure make no specific limitation. Offline configuration items of each light app may be configured by a server corresponding to the light app. Then the offline configuration items are sent to a cloud server. Offline configuration items of each light app may also be directly configured by the cloud server. The embodiments of the present disclosure do not make specific limitation to the configuration manners employed.

In addition, an offline configuration item mainly comprises offline data elimination time information and offline data elimination space information. As for a light app, offline data elimination time information is used to determine the frequency of eliminating offline data stored in a corresponding offline partition; offline data elimination space information is used to determine the maximum size of offline data stored in a corresponding offline partition until eliminating offline data in the corresponding offline partition, and to expand, according to the offline data, the size of an offline partition initially set for space information extension. For example, for an image type light app, when initially setting an offline partition in Step 201, the terminal may allot storage space of 128M by default, but the space for eliminating offline data in an offline configuration item is 1G. Therefore, the terminal will expand, after receiving the offline configuration item of the image type light app, the corresponding offline partition from 128M to 1G.

It should be explained that, generally, the updating speed of an image type website is far lower than that of a text type website. Therefore, offline data elimination time of an image type light app is generally greater than that of a text type light app.

In the embodiments of the present disclosure, the terminal may acquire from the server an offline configuration item corresponding to a light app by calling Network Services Interface of the system thereof. Of course, in addition to the foregoing acquisition manner, the terminal may also employ other manners, to which the embodiments of the present disclosure make no specific limitation.

In Step 205, the terminal may process offline data in the offline partition of the light app according to the offline configuration item.

In the embodiments of the present disclosure, the terminal usually processes offline data in the offline partition of the light app by:
encapsulating the offline configuration item and acquiring an encapsulating object; sending the encapsulating object to a custom elimination thread; and processing, according to the encapsulating object, offline data in the offline partition of the light app by means of the elimination thread.

The elimination thread is a program running. The elimination thread may eliminate, according to offline data elimination time information and offline data elimination space information contained in the encapsulating object, offline data in offline partitions of light apps.

Of course, in addition to the foregoing manner for processing offline data in the offline partition of the light app, other manners may also be employed, to which the embodiments of the present disclosure make no specific limitation.

As for a certain light app, after the terminal acquires an offline configuration item corresponding to the light app, offline data in the offline partition of the light app is eliminated by:
deleting offline data in the offline partition of the light app every time interval corresponding to offline data elimination time information; deleting offline data in the offline partition of the light app when offline data in the offline partition of the light app is beyond a data storage capacity corresponding to the offline data elimination space information.

Taking an example in which offline data elimination time is five minutes and offline data elimination space is 128M, all offline data in the offline partition corresponding to a light app are deleted every five minutes so as to store the latest page contents to be acquired later in the storage space released. When offline data in the offline partition of the light app is beyond 128M, all offline data in the offline partition of the light app are deleted so as to store the latest page contents to be acquired later in the storage space released.

It should be explained that after deleting offline data in the offline partition of the light app, the step of acquiring key elements of the page corresponding to the light app is continued if the current network status is better; and the key elements of the page are key elements updated recently.

With the method according to the embodiments of the present disclosure, if a start-up operation of the light app is detected by the terminal, an offline configuration item corresponding to the light app is acquired from a server, and offline data in an offline partition of the light app is processed, according to the offline configuration item. Controlling elimination of offline data of the light app by a cloud server and providing users with web browsing under weak network signal or even no network signal is thus reached, which improves user experience.

Fig. 3 is a block diagram showing a light app offline updating device according to an exemplary embodiment. Referring to Fig. 3, the device comprises a partition setup module 301, a page element acquisition module 302, a data storage module 303, a configuration item acquisition module 304 and a data processing module 305.

The partition setup module 301 is configured to respectively set an offline partition for each light app; the page element acquisition module 302 is connected to the partition setup module 301 and is configured to acquire, for each light app, key elements of a page corresponding to the light app when network download speed is greater than a preset threshold value; the data storage module 303 is connected to the page element acquisition module 302 and is configured to store key elements of the page as offline data in a corresponding offline partition; the configuration item acquisition module 304 is connected to the data storage module 303 and is configured to acquire from a server, if a start-up operation of the light app is detected, an offline configuration item corresponding to the light app, the offline configuration item is configured by the server; and the data processing module 305 is connected to the configuration item acquisition module 304 and is configured to process, according to the offline configuration item, offline data in the offline partition of the light app.

Optionally, the offline configuration item comprises offline data elimination time information; and the data processing module is configured to delete offline data in the offline partition of the light app every time interval corresponding to offline data elimination time information.

Optionally, the offline configuration item comprises offline data elimination space information, and the data processing module is configured to delete offline data in the offline partition of the light app when offline data in the offline partition of the light app is beyond a data storage capacity corresponding to the offline data elimination space information.

Optionally, the data processing module is configured to encapsulate the offline configuration item and acquire an encapsulating object; send the encapsulating object to a custom elimination thread; and process, according to the encapsulating object, offline data in the offline partition of the light app by means of the elimination thread.

Optionally, the page element acquisition module is configured to acquire key elements of the page corresponding to the light app by monitoring data packets flowing through the network.

Optionally, the partition setup module is configured to set a first type offline partition for the light app if the light app is an image type light app; and to set a second type offline partition for the light app if the light app is a text type light app;
the storage space of the first type offline partition being greater than that of the second type offline partition.

Optionally, offline data elimination time of the image type light app is greater than that of the text type light app.

With the device according to the embodiments of the present disclosure, if a start-up operation of the light app is detected by the terminal, an offline configuration item corresponding to the light app is acquired from a server, and offline data in an offline partition of the light app is processed, according to the offline configuration item. Controlling elimination of offline data of the light app by a cloud server and providing users with web browsing under weak network signal or even no network signal is thus reached, which improves user experience.

With regard to the device in the above embodiment, detailed description of specific manners for carrying out operations of modules has been made in the embodiment related to the method, so no detailed illustration will be made herein.

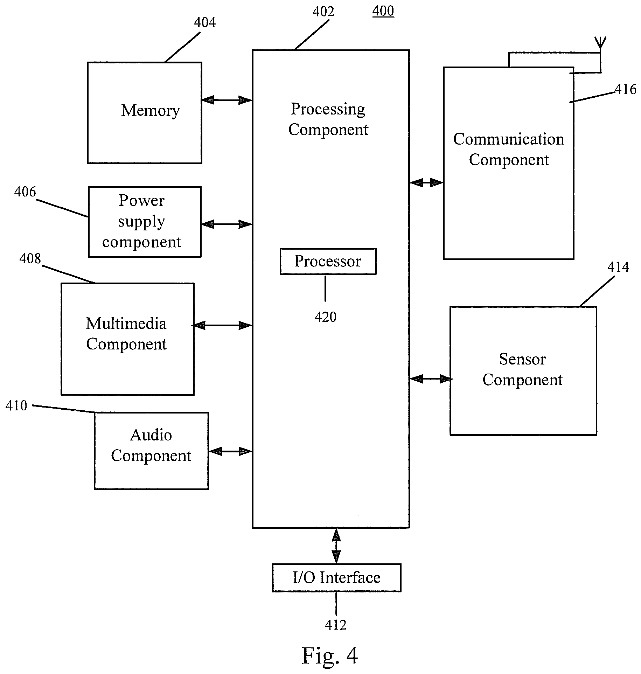

Fig. 4 is a block diagram of a terminal 400 for light app offline updating according to an exemplary embodiment. For example, the terminal 400 may be a mobile telephone, a computer, a digital broadcasting terminal, a message transceiver device, a games console, a tablet device, a medical device, a fitness facility, a PDA (personal digital assistant) and the like.

Referring to Fig.4, the terminal 400 may include one or a plurality of components as below: a processor component 402, a memory 404, a power supply component 406, a multimedia component 408, an audio component 410, an input/output (I/O) interface 412, a sensor component 414 and a communication component 416.

The processor component 402 usually controls the overall operation of the terminal 400, for example, display, telephone call, data communication, and operation associated with camera operation and record operation. The processor component 402 may include one or a plurality of processors 420 for executing instructions so as to complete steps of above method in part or in whole. In addition, the processor component 402 may include one or a plurality of modules for the convenience of interaction between the processor component 402 and other components. For example, the processor component 402 may include a multimedia module for the convenience of interaction between the multimedia component 408 and the processor component 402.

The memory 404 is configured to store data of different types so as to support the operation of the terminal 400. Examples of the data include any application program or approach directive for operation of the terminal 400, including contact data, phonebook data, message, picture and video, etc. The memory 404 may be realized by volatile or non-volatile memory device of any type or combination thereof, for example, static random access memory (SRAM), electrically erasable programmable read-only memory (EEPROM), erasable programmable read only memory (EPROM), programmable read-only memory (PROM), read-only memory (ROM), magnetic memory, flash memory, magnetic disk or optical disk.

The power supply component 406 provides power for components of the terminal 400. The power supply component 406 may include a power management system, one or a plurality of power supplies, and other components associated with generation, management and power distribution of the terminal 400.

The multimedia component 408 includes a screen between the terminal 400 and a user and for providing an output interface. In some embodiments, a screen may include an LCD (Liquid Crystal Display) and a TP (Touch Panel). If the screen includes a TP, the screen may be realized as a touch screen for receiving input signal from users. The TP includes one or a plurality of touch sensors for sensing gestures on the touch panel, for example, touching and sliding, etc. The touch sensor not only can sensor trip boundary of touching or sliding, but also can detect the duration and pressure related to the touching or sliding operation. In some embodiments, the multimedia component 408 includes a front-facing camera and/or a rear-facing camera. When the terminal 400 is under an operation mode, for example, capture mode or video mode, the front-facing camera and/or the rear-facing camera may receive external multimedia data. Each front-facing camera and rear-facing camera may be a fixed optical lens system or have focal length and optical zoom capacity.

The audio component 410 is configured to output and/or input audio signal. For example, the audio component 410 includes a microphone (MIC); when the terminal 400 is under an operation mode such as call mode, record mode and speech recognition mode, the microphone is configured to receive external audio signal. The audio signal received may be further stored in the memory 404 or sent out by the communication component 416. In some embodiments, the audio component 410 also includes a loudspeaker for outputting audio signal.

The I/O interface 412 provides interface for the processor component 402 and peripheral interface modules, the peripheral interface modules may be a keyboard, a click wheel and buttons, etc. These buttons may include but not limited to: home button, volume button, start button and locking button.

The sensor component 414 includes one or a plurality of sensors for providing the terminal 400 with state evaluation from all aspects. For example, the sensor component 414 may detect the on/off state of the terminal 400, relative positioning of components, for example, the components are the displayer and keypads of the terminal 400; the sensor component 414 also may detect the position change of the terminal 400 or a component thereof, the presence or absence of users' touch on the terminal 400, the direction or acceleration/deceleration of the terminal 400, and temperature variation of the terminal 400. The sensor component 414 may also include a proximity detector, which is configured to detect the presence of nearby objects in case of no physical touch. The sensor component 414 may also include an optical sensor, for example, CMOS (Complementary Metal Oxide Semiconductor) or CCD (Charge-coupled Device) image sensor for imaging. In some embodiments, the sensor component 414 may also include an acceleration sensor, a gyro sensor, a magnetic sensor, a pressure sensor, or a temperature sensor.

The communication component 416 is configured to facilitate wired communication or wireless communication between the terminal 400 and other equipment. The terminal 400 is available for access to wireless network based on communication standards such as WiFi, 2G or 3G, or combination thereof. In an exemplary embodiment, the communication component 416 receives by means of a broadcast channel the broadcast signal or broadcast-related information from external broadcast management systems. In an exemplary embodiment, the communication component 416 also includes a near field communication (NFC) module for promoting short-range communication. For example, the NFC module may be realized on the basis of RFID (Radio Frequency Identification) Technology, IrDA (Infrared Data Association) Technology, UWB (Ultra-wide Bandwidth) Technology, BT (Bluetooth) Technology and other technologies.

In exemplary embodiments, the terminal 400 may be realized by one or a plurality of application specific integrated circuits (ASIC), digital signal processors (DSP), digital signal processing equipment (DSPD), programmable logic devices (PLD), field programmable gate arrays (FPGA), controllers, microcontrollers, microprocessors or other electronic components, configured to execute the above methods.

In exemplary embodiments, a non-transitory computer-readable storage medium including instructions is also provided, for example, a memory 404 including instructions, above instructions may be executed by the processors 420 of the terminal 400 so as to achieve the above methods. For example, the non-transitory computer-readable storage medium may be ROM, RAM (random access memory), CD-ROM (Compact Disc Read-Only Memory), magnetic tape, floppy disk and optical data storage device, etc.

A non-transitory computer-readable storage medium is provided. When instructions in the storage medium are executed by a processor of a terminal, the terminal may execute a light app offline updating method comprising:
respectively setting an offline partition for each light app;
acquiring, for each light app, key elements of a page corresponding to the light app when network download speed is greater than a preset threshold value;
storing key elements of the page as offline data in the corresponding offline partition;
acquiring from a server, if a start-up operation of the light app is detected, an offline configuration item corresponding to the light app, the offline configuration item being configured by the server; and
processing, according to the offline configuration item, offline data in the offline partition of the light app.

Optionally, the offline configuration item comprises offline data elimination time information; and the step of processing, according to the offline configuration item, offline data in the offline partition of the light app comprises:
deleting offline data in the offline partition of the light app every time interval corresponding to offline data elimination time information.

Optionally, the offline configuration item comprises offline data elimination space information; and the step of processing, according to the offline configuration item, offline data in the offline partition of the light app comprises:
deleting offline data in the offline partition of the light app when offline data in the offline partition of the light app is beyond a data storage capacity corresponding to the offline data elimination space information.

Optionally, the step of processing, according to the offline configuration item, offline data in an offline partition of the light app comprises:
encapsulating the offline configuration item and acquiring an encapsulating object;
sending the encapsulating object to a custom elimination thread; and
processing, according to the encapsulating object, offline data in the offline partition of the light app by means of the elimination thread.

Optionally, the step of acquiring key elements of the page corresponding to the light app comprises:
acquiring key elements of the page corresponding to the light app by monitoring data packets flowing through the network.

Optionally, the step of respectively setting an offline partition for each light app comprises:
setting a first type offline partition for the light app if the light app is an image type light app; and
setting a second type offline partition for the light app if the light app is a text type light app;
the storage space of the first type offline partition being greater than that of the second type offline partition.

Optionally, offline data elimination time of the image type light app is greater than that of the text type light app.

With the non-transitory computer-readable storage medium according to the embodiments of the present disclosure, it is performed that acquiring from a server, if a start-up operation of a light app is detected by the terminal, an offline configuration item corresponding to the light app, and processing, according to the offline configuration item, offline data in the offline partition of the light app, thus reaching the object of controlling elimination of offline data of the light app by a cloud server and providing users with web browsing under weak network signal or even no network signal, thereby improving user experience.

## Claims

1. A light app offline updating method implemented by a terminal, the light app being an application for presenting web page content by means of a browser kernel with a client-side application manner, the method comprising:
respectively setting (101, 201) an offline partition for each light app;
acquiring (102, 202), for each light app, key elements of a page corresponding to the light app when network download speed is greater than a preset threshold value, the keys elements being key items emerging on each page;
storing (103, 203) key elements of the page as offline data in the corresponding offline partition;
acquiring (104, 204) from a server, if a start-up operation of the light app is detected, an offline configuration item corresponding to the light app, the offline configuration item being configured by the server; and
processing (205), according to the offline configuration item, offline data in the offline partition of the light app,
**characterized in that**:
the offline configuration item comprises offline data elimination time information and the step of processing, according to the offline configuration item, offline data in the offline partition of the light app comprises:
deleting offline data in the offline partition of the light app every time interval corresponding to offline data elimination time information, or
the offline configuration item comprises offline data elimination space information and the step of processing, according to the offline configuration item, offline data in the offline partition of the light app comprises:
deleting offline data in the offline partition of the light app when offline data in the offline partition of the light app is beyond a data storage capacity corresponding to the offline data elimination space information.

2. The method according to claim 1, wherein the step of processing, according to the offline configuration item, offline data in the offline partition of the light app comprises:
encapsulating the offline configuration item and acquiring an encapsulating object;
sending the encapsulating object to a custom elimination thread; and
processing, according to the encapsulating object, offline data in the offline partition of the light app by means of the elimination thread.

3. The method according to claim 1 or 2, wherein the step (104) of acquiring key elements of the page corresponding to the light app comprises:
acquiring key elements of the page corresponding to the light app by monitoring data packets flowing through network.

4. The method according to any one of claims 1 to 3, wherein the step (101) of respectively setting an offline partition for each light app comprises:
setting a first type offline partition for the light app if the light app is an image type light app; and
setting a second type offline partition for the light app if the light app is a text type light app;
wherein storage space of the first type offline partition is greater than that of the second type offline partition.

5. The method according to claim 4, wherein offline data elimination time of the image type light app is greater than that of the text type light app.

6. A light app offline updating device, the light app being an application for presenting web page content by means of a browser kernel with a client-side application manner, the device comprising:
a partition setup module (301), configured to respectively set an offline partition for each light app;
a page element acquisition module (302), configured to acquire, for each light app, key elements of a page corresponding to the light app when network download speed is greater than a preset threshold value, the keys elements being key items emerging on each page;
a data storage module (303), configured to store key elements of the page as offline data in the corresponding offline partition;
a configuration item acquisition module (304), configured to acquire from a server, if a start-up operation of the light app is detected, an offline configuration item corresponding to the light app, the offline configuration item being configured by the server; and
a data processing module (305), configured to process, according to the offline configuration item, offline data in the offline partition of the light app,
**characterized in that**:
the offline configuration item comprises offline data elimination time information and the data processing module (305) is configured to delete offline data in the offline partition of the light app every time interval corresponding to offline data elimination time information,
or
the offline configuration item comprises offline data elimination space information and the data processing module (305) is configured to delete offline data in the offline partition of the light app when offline data in the offline partition of the light app is beyond a data storage capacity corresponding to the offline data elimination space information.

7. The device according to claim 6, wherein the data processing module (305) is configured to encapsulate the offline configuration item and acquire an encapsulating object; send the encapsulating object to a custom elimination thread; and process, according to the encapsulating object, offline data in the offline partition of the light app by means of the elimination thread.

8. The device according to claim 6 or 7, wherein the page element acquisition module is configured to acquire key elements of the page corresponding to the light app by monitoring data packets flowing through network.

9. The device according to any one of claims 6 to 8, wherein the partition setup module is configured to set a first type offline partition for the light app if the light app is an image type light app; and to set a second type offline partition for the light app if the light app is a text type light app;
wherein storage space of the first type offline partition is greater than that of the second type offline partition.

10. The device according to claim 9, wherein offline data elimination time of the image type light app is greater than that of the text type light app.

11. A computer program, including instructions for executing the steps of a light app offline updating method according to any one of claims 1 to 5 when said program is executed by a computer.

## Patentansprüche

1. Offline-Aktualisierungsverfahren für eine schlanke Applikation, implementiert von einem Endgerät, wobei die schlanke Applikation eine Anwendung zum Präsentieren von Webseiteninhalten mittels eines Browser-Kernels mit einer clientseitigen Anwendungsweise ist, wobei das Verfahren umfasst:
jeweiliges Festlegen (101, 201) einer Offline-Partition für jede schlanke Applikation,
Erlangen (102, 202) von Schlüsselelementen einer Seite, die der schlanken Applikation entspricht, für jede schlanke Applikation, wenn die Netzwerk-Download-Geschwindigkeit größer als ein voreingestellter Schwellenwert ist, wobei die Schlüsselelemente Schlüsselobjekte sind, die auf jeder Seite erscheinen,
Speichern (103, 203) von Schlüsselelementen der Seite als Offline-Daten in der entsprechenden Offline-Partition,
Erlangen (104, 204) eines Offline-Konfigurationsobjekts, das der schlanken Applikation entspricht, von einem Server, wenn ein Startvorgang der schlanken Applikation erfasst wird, wobei das Offline-Konfigurationsobjekt von dem Server konfiguriert wird, und
Verarbeiten (205) von Offline-Daten in der Offline-Partition der schlanken Applikation gemäß dem Offline-Konfigurationsobjekt,
**dadurch gekennzeichnet, dass**:
das Offline-Konfigurationsobjekt Zeitangaben für die Offline-Dateneliminierung umfasst und der Schritt des Verarbeitens von Offline-Daten in der Offline-Partition der schlanken Applikation gemäß dem Offline-Konfigurationsobjekt umfasst:
Löschen von Offline-Daten in der Offline-Partition der schlanken Applikation in jedem Zeitintervall, das Zeitangaben für die Offline-Dateneliminierung entspricht, oder
das Offline-Konfigurationsobjekt Raumangaben für die Offline-Dateneliminierung umfasst und der Schritt des Verarbeitens von Offline-Daten in der Offline-Partition der schlanken Applikation gemäß dem Offline-Konfigurationsobjekt umfasst:
Löschen von Offline-Daten in der Offline-Partition der schlanken Applikation, wenn Offline-Daten in der Offline-Partition der schlanken Applikation eine Datenspeicherkapazität überschreiten, die den Raumangaben für die Offline-Dateneliminierung entspricht.

2. Verfahren nach Anspruch 1, wobei der Schritt des Verarbeitens von Offline-Daten in der Offline-Partition der schlanken Applikation gemäß dem Offline-Konfigurationsobjekt umfasst:
Verkapseln des Offline-Konfigurationsobjekts und Erlangen eines Verkapselungsgegenstands,
Senden des Verkapselungsgegenstands an einen benutzerdefinierten Eliminierungs-Thread, und
Verarbeiten von Offline-Daten in der Offline-Partition der schlanken Applikation gemäß dem Verkapselungsgegenstand mittels des Eliminierungs-Threads.

3. Verfahren nach Anspruch 1 oder 2, wobei der Schritt (104) des Erlangens von Schlüsselelementen der Seite, die der schlanken Applikation entspricht, umfasst:
Erlangen von Schlüsselelementen der Seite, die der schlanken Applikation entspricht, durch Überwachen von Datenpaketen, die durch das Netzwerk fließen.

4. Verfahren nach einem der Ansprüche 1 bis 3, wobei der Schritt (101) des jeweiligen Festlegens einer Offline-Partition für jede schlanke Applikation umfasst:
Festlegen einer Offline-Partition eines ersten Typs für die schlanke Applikation, wenn die schlanke Applikation eine schlanke Applikation vom Bildtyp ist, und
Festlegen einer Offline-Partition eines zweiten Typs für die schlanke Applikation, wenn die schlanke Applikation eine schlanke Applikation vom Texttyp ist,
wobei der Speicherplatz der Offline-Partition des ersten Typs größer als jener der Offline-Partition des zweiten Typs ist.

5. Verfahren nach Anspruch 4, wobei die Offline-Daten-Eliminierungszeit der schlanken Applikation vom Bildtyp größer als jene der schlanken Applikation vom Texttyp ist.

6. Offline-Aktualisierungsvorrichtung für eine schlanke Applikation, wobei die schlanke Applikation eine Anwendung zum Präsentieren von Webseiteninhalten mittels eines Browser-Kernels mit einer clientseitigen Anwendungsweise ist, wobei die Vorrichtung umfasst:
ein Partition-Setup-Modul (301), das dazu ausgestaltet ist, jeweils eine Offline-Partition für jede schlanke Applikation festzulegen,
ein Seitenelement-Erlangungsmodul (302), das dazu ausgestaltet ist, für jede schlanke Applikation Schlüsselelemente einer Seite zu erlangen, die der schlanken Applikation entspricht, wenn die Netzwerk-Download-Geschwindigkeit größer als ein voreingestellter Schwellenwert ist, wobei die Schlüsselelemente Schlüsselobjekte sind, die auf jeder Seite erscheinen,
ein Datenspeichermodul (303), das dazu ausgestaltet ist, Schlüsselelemente der Seite als Offline-Daten in der entsprechenden Offline-Partition zu speichern,
ein Konfigurationsobjekt-Erlangungsmodul (304), das dazu ausgestaltet ist, ein Offline-Konfigurationsobjekt, das der schlanken Applikation entspricht, von einem Server zu erlangen, wenn ein Startvorgang der schlanken Applikation erfasst wird, wobei das Offline-Konfigurationsobjekt von dem Server konfiguriert wird, und
ein Datenverarbeitungsmodul (305), das dazu ausgestaltet ist, Offline-Daten in der Offline-Partition der schlanken Applikation gemäß dem Offline-Konfigurationsobjekt zu verarbeiten,
**dadurch gekennzeichnet, dass**:
das Offline-Konfigurationsobjekt Zeitangaben für die Offline-Dateneliminierung umfasst und das Datenverarbeitungsmodul (305) dazu ausgestaltet ist, Offline-Daten in der Offline-Partition der schlanken Applikation in jedem Zeitintervall zu löschen, das Zeitangaben für die Offline-Dateneliminierung entspricht,
oder
das Offline-Konfigurationsobjekt Raumangaben für die Offline-Dateneliminierung umfasst und das Datenverarbeitungsmodul (305) dazu ausgestaltet ist, Offline-Daten in der Offline-Partition der schlanken Applikation zu löschen, wenn Offline-Daten in der Offline-Partition der schlanken Applikation eine Datenspeicherkapazität überschreiten, die den Raumangaben für die Offline-Dateneliminierung entspricht.

7. Vorrichtung nach Anspruch 6, wobei das Datenverarbeitungsmodul (305) dazu ausgestaltet ist, das Offline-Konfigurationsobjekt zu verkapseln und einen Verkapselungsgegenstand zu erlangen, den Verkapselungsgegenstand an einen benutzerdefinierten Eliminierungs-Thread zu senden, und Offline-Daten in der Offline-Partition der schlanken Applikation gemäß dem Verkapselungsgegenstand mittels des Eliminierungs-Threads zu verarbeiten.

8. Vorrichtung nach Anspruch 6 oder 7, wobei das Seitenelement-Erlangungsmodul dazu ausgestaltet ist, Schlüsselelemente der Seite, die der schlanken Applikation entspricht, durch Überwachen von Datenpaketen, die durch das Netzwerk fließen, zu erlangen.

9. Vorrichtung nach einem der Ansprüche 6 bis 8, wobei das Partition-Setup-Modul dazu ausgestaltet ist, eine Offline-Partition eines ersten Typs für die schlanke Applikation festzulegen, wenn die schlanke Applikation eine schlanke Applikation vom Bildtyp ist, und eine Offline-Partition eines zweiten Typs für die schlanke Applikation festzulegen, wenn die schlanke Applikation eine schlanke Applikation vom Texttyp ist,
wobei der Speicherplatz der Offline-Partition des ersten Typs größer als jener der Offline-Partition des zweiten Typs ist.

10. Vorrichtung nach Anspruch 9, wobei die Offline-Daten-Eliminierungszeit der schlanken Applikation vom Bildtyp größer als jene der schlanken Applikation vom Texttyp ist.

11. Computerprogramm, das Anweisungen zum Ausführen der Schritte eines Offline-Aktualisierungsverfahren für eine schlanke Applikation nach einem der Ansprüche 1 bis 5 beinhaltet, wenn das Programm von einem Computer ausgeführt wird.

## Revendications

1. Procédé de mise à jour hors ligne d'application légère mis en œuvre par un terminal, l'application légère étant une application destinée à présenter un contenu de page web au moyen d'un noyau de navigateur d'une manière qui fait appel à une application côté dispositif client, le procédé comprenant les étapes ci-dessous consistant à :
définir respectivement (101, 201) une partition hors ligne pour chaque application légère ;
acquérir (102, 202), pour chaque application légère, des éléments clés d'une page correspondant à l'application légère, lorsque la vitesse de téléchargement réseau est supérieure à une valeur de seuil prédéfinie, les éléments clés étant des articles clés apparaissant sur chaque page ;
stocker (103, 203) des éléments clés de la page en tant que des données hors ligne dans la partition hors ligne correspondante ;
acquérir (104, 204), à partir d'un serveur, si une opération de démarrage de l'application légère est détectée, un article de configuration hors ligne correspondant à l'application légère, l'article de configuration hors ligne étant configuré par le serveur ; et
traiter (205), selon l'article de configuration hors ligne, des données hors ligne dans la partition hors ligne de l'application légère ;
**caractérisé en ce que** :
l'article de configuration hors ligne comprend des informations de temps d'élimination de données hors ligne, et l'étape de traitement, selon l'article de configuration hors ligne, de données hors ligne dans la partition hors ligne de l'application légère, comprend l'étape ci-dessous consistant à :
supprimer des données hors ligne dans la partition hors ligne de l'application légère à chaque intervalle de temps correspondant à des informations de temps d'élimination de données hors ligne ; ou
l'article de configuration hors ligne comprend des informations d'espace d'élimination de données hors ligne, et l'étape de traitement, selon l'article de configuration hors ligne, de données hors ligne dans la partition hors ligne de l'application légère, comprend l'étape ci-dessous consistant à :
supprimer des données hors ligne dans la partition hors ligne de l'application légère lorsque des données hors ligne dans la partition hors ligne de l'application légère dépassent une capacité de stockage de données correspondant aux informations d'espace d'élimination de données hors ligne.

2. Procédé selon la revendication 1, dans lequel l'étape de traitement, selon l'article de configuration hors ligne, de données hors ligne dans la partition hors ligne de l'application légère, comprend les étapes ci-dessous consistant à :
encapsuler l'article de configuration hors ligne et acquérir un objet d'encapsulation ;
envoyer l'objet d'encapsulation à un fil d'exécution d'élimination personnalisé ; et
traiter, selon l'objet d'encapsulation, des données hors ligne dans la partition hors ligne de l'application légère, au moyen du fil d'exécution d'élimination.

3. Procédé selon la revendication 1 ou 2, dans lequel l'étape (104) d'acquisition d'éléments clés de la page correspondant à l'application légère consiste à :
acquérir des éléments clés de la page correspondant à l'application légère en surveillant des paquets de données transitant par le réseau.

4. Procédé selon l'une quelconque des revendications 1 à 3, dans lequel l'étape (101) consistant à définir respectivement une partition hors ligne pour chaque application légère comprend les étapes ci-dessous consistant à :
définir une partition hors ligne de premier type pour l'application légère si l'application légère est une application légère de type image ; et
définir une partition hors ligne de second type pour l'application légère si l'application légère est une application légère de type texte ;
dans lequel un espace de stockage de la partition hors ligne de premier type est supérieur à celui de la partition hors ligne de second type.

5. Procédé selon la revendication 4, dans lequel le temps d'élimination de données hors ligne de l'application légère de type image est supérieur à celui de l'application légère de type texte.

6. Dispositif de mise à jour hors ligne d'application légère, dans lequel l'application légère est une application destinée à présenter un contenu de page web au moyen d'un noyau de navigateur d'une manière qui fait appel à une application côté dispositif client, le dispositif comprenant :
un module de définition de partition (301), configuré de manière à définir respectivement une partition hors ligne pour chaque application légère ;
un module d'acquisition d'éléments de page (302), configuré de manière à acquérir, pour chaque application légère, des éléments clés d'une page correspondant à l'application légère, lorsqu'une vitesse de téléchargement réseau est supérieure à une valeur de seuil prédéfinie, les éléments clés étant des articles clés apparaissant sur chaque page ;
un module de stockage de données (303), configuré de manière à stocker des éléments clés de la page en tant que des données hors ligne dans la partition hors ligne correspondante ;
un module d'acquisition d'article de configuration (304), configuré de manière à acquérir, à partir d'un serveur, si une opération de démarrage de l'application légère est détectée, un article de configuration hors ligne correspondant à l'application légère, l'article de configuration hors ligne étant configuré par le serveur ; et
un module de traitement de données (305), configuré de manière à traiter, selon l'article de configuration hors ligne, des données hors ligne dans la partition hors ligne de l'application légère ;
**caractérisé en ce que** :
l'article de configuration hors ligne comprend des informations de temps d'élimination de données hors ligne, et le module de traitement de données (305) est configuré de manière à supprimer des données hors ligne dans la partition hors ligne de l'application légère, à chaque intervalle de temps correspondant à des informations de temps d'élimination de données hors ligne ; ou
l'article de configuration hors ligne comprend des informations d'espace d'élimination de données hors ligne, et le module de traitement de données (305) est configuré de manière à supprimer des données hors ligne dans la partition hors ligne de l'application légère lorsque des données hors ligne dans la partition hors ligne de l'application légère dépassent une capacité de stockage de données correspondant aux informations d'espace d'élimination de données hors ligne.

7. Dispositif selon la revendication 6, dans lequel le module de traitement de données (305) est configuré de manière à encapsuler l'article de configuration hors ligne et à acquérir un objet d'encapsulation ; à envoyer l'objet d'encapsulation à un fil d'exécution d'élimination personnalisé ; et à traiter, selon l'objet d'encapsulation, des données hors ligne dans la partition hors ligne de l'application légère au moyen du fil d'exécution d'élimination.

8. Dispositif selon la revendication 6 ou 7, dans lequel le module d'acquisition d'éléments de page est configuré de manière à acquérir des éléments clés de la page correspondant à l'application légère, en surveillant des paquets de données transitant par le réseau.

9. Dispositif selon l'une quelconque des revendications 6 à 8, dans lequel le module de définition de partition est configuré de manière à définir une partition hors ligne de premier type pour l'application légère, si l'application légère est une application légère de type image ; et à définir une partition hors ligne de second type pour l'application légère, si l'application légère est une application légère de type texte ;
dans lequel l'espace de stockage de la partition hors ligne de premier type est supérieur à celui de la partition hors ligne de second type.

10. Dispositif selon la revendication 9, dans lequel le temps d'élimination de données hors ligne de l'application légère de type image est supérieur à celui de l'application légère de type texte.

11. Programme informatique incluant des instructions pour exécuter les étapes d'un procédé de mise à jour hors ligne d'application légère selon l'une quelconque des revendications 1 à 5, lorsque ledit programme est exécuté par un ordinateur.
